# EUROPEAN PATENT APPLICATION

(11) **EP 4 772 303 A1**
(43) Date of publication of application: **08.07.2026**
(21) Application number: 25861783.6
(22) Date of filing: 26.09.2025
(51) Int. Cl.: B23K 26/362, B23K 26/00, B23K 26/16, B23D 15/02, B23D 15/12, H01M 4/04

(54) **SUCTION DEVICE AND TAB NOTCHING DEVICE INCLUDING SAME**

(30) Priority: 11.10.2024 KR 20240138909
(71) Applicant: LG ENERGY SOLUTION, LTD., Seoul 07335 (KR)
(72) Inventor: PARK, Jae Wan, Yuseong-gu Daejeon 34122 (KR)
(74) Representative: Goddar, Heinz J.
(86) International application number: PCT/KR2025/015202
(87) International publication number: WO 2026/079757

(57) **Abstract**

A tab notching apparatus according to the present disclosure includes a suction pipe having a suction hole through which a residual scrap moves, the residual scrap being formed in forming an electrode tab, and a cutting device configured to cut the residual scrap moving toward the suction hole, wherein the cutting device includes a cutter configured to slidably move.

## Description

### TECHNICAL FIELD

### CROSS-REFERENCE TO RELATED APPLICATIONS

This application is based on and claims priority from Korean Patent Application No. 10-2024-0138909 filed on October 11, 2024 with the Korean Intellectual Property Office, the disclosure of which is incorporated herein in its entirety by reference.

### TECHNICAL FIELD

The present disclosure relates to a suction device and a tab notching apparatus including the same. More particularly, the present disclosure relates to a suction device that has solved a problem occurring during suction of residual scrap created in tab forming, and a tab notching apparatus including the same.

### BACKGROUND ART

A secondary battery designed to generate electricity includes a current collector on which an electrode active material is placed. An electrode tab having a smaller width than the current collector body is formed at one end of the current collector, and the electrode active material is not placed on the electrode tab. The current collector includes a plurality of current collectors, and the current collectors are stacked on each other. In this instance, the electrode tabs of the current collectors are welded together and the produced electricity moves through the welded electrode tabs. In this instance, to form the electrode tab, a notching process of cutting a part of the current collector may be performed.

During the notching process, it is necessary to apply suction to dispose of scrap remaining after forming the electrode tab. The residual scrap may be disposed of by moving it through a suction pipe. However, the residual scrap may clump together while it moves through the suction pipe, resulting in the clogged suction pipe.

Further, during the formation of the electrode tab, one residual scrap corresponding to one electrode tab is not formed, and a single long residual scrap for a plurality of electrode tabs may be formed, and in this case, the elongated residual scrap may be more likely to cause the suction pipe to clog.

The above-described background is information possessed or acquired by the inventor in the process of arriving at the present disclosure, and is not necessarily the prior art published and known to the general public before the time of filing.

### DISCLOSURE

### TECHNICAL PROBLEM

The present disclosure is designed to solve the above-described problems, and therefore the present disclosure is directed to preventing residual scrap created in electrode tab forming from causing a suction pipe to clog.

The technical problems of the present disclosure to be solved are not limited to the above-mentioned technical problems, and these and other technical problems will be clearly understood by persons having ordinary skill in the technical field pertaining to the present disclosure from the following description.

### TECHNICAL SOLUTION

A tab notching apparatus according to an embodiment of the present disclosure includes a suction pipe having a suction hole through which a residual scrap moves, the residual scrap being formed in forming an electrode tab, and a cutting device configured to cut the residual scrap moving toward the suction hole, and the cutting device includes a cutter configured to slidably move.

The cutter may include a pair of cutters with end portions facing each other.

The pair of the cutters may be configured to be located at a cutting position at which the end portions contact each other and a faraway position at which the end portions are spaced apart from each other, and the cutters may be configured to cut the residual scrap at the cutting position.

The cutter may have a cutter outer surface facing away from the suction pipe, and the cutter outer surface may be inclined along an extension direction of the suction pipe from an inlet of the suction pipe as it goes toward an end portion.

Each of the pair of cutters may have a cutter outer surface facing away from the suction pipe, and the cutter outer surface of each of the pair of cutters may be inclined along an extension direction of the suction pipe from an inlet of the suction pipe as they get closer to each other.

The pair of cutters may have, at the end portions, a portion having a decreasing cross-sectional area as they get closer to each other.

The cutter may be located adjacent to an inlet of the suction pipe.

The cutter may be located outside an inlet of the suction pipe.

The cutting device may further include a cutter housing accommodating the cutter, and the cutter housing may include a mount portion configured to be detachably mounted onto the suction pipe.

The cutter housing may include a guide portion configured to guide the movement of the cutter, the guide portion may have a guide opening where the cutter is located, and a width of the guide opening may correspond to a width of the cutter.

The guide opening may have a larger cross-sectional area than an inlet of the suction pipe.

The cutting device may further include a motor configured to apply a driving force to the cutter to move the cutter.

The tab notching apparatus may further include a suction pump configured to form negative pressure in the suction pipe.

The tab notching apparatus may further include a notching module configured to form the electrode tab, and the notching module may be provided to prevent the residual scrap formed during the formation of the adjacent electrode tab from getting it cut.

The tab notching apparatus may further include a stage on which the electrode tab is located, the suction pipe may be located adjacent to the stage, and the cutter may be located adjacent to the stage.

A tab notching apparatus according to an embodiment of the present disclosure includes a suction pipe having a suction hole through which a residual scrap moves, the residual scrap being formed in forming an electrode tab, and a cutting device including a cutter configured to cut the residual scrap moving toward the suction hole, and the cutter may be located outside an inlet of the suction pipe.

The cutter may be configured to slidably move.

The cutter may include a pair of cutters with end portions facing each other.

The pair of the cutters may be configured to be located at a cutting position at which the end portions contact each other and a faraway position at which the end portions are spaced apart from each other, and the cutters may be configured to cut the residual scrap at the cutting position.

A suction device according to an embodiment of the present disclosure includes a suction pipe having a suction hole through which a residual scrap moves, and a cutting device configured to cut the residual scrap moving toward the suction hole, and the cutting device may include a cutter configured to slidably move.

### ADVANTAGEOUS EFFECTS

The suction device according to an embodiment of the present disclosure includes the cutting device to cut the residual scrap, thereby preventing the residual scrap created in electrode tab forming from causing the suction pipe to clog.

The cutting device included in the suction device according to an embodiment of the present disclosure includes the cutter configured to slidably move, thereby preventing the problem that the residual scrap is pulled down when the cutting device cuts the residual scrap while rotating.

The cutting device included in the suction device according to an embodiment of the present disclosure is located outside the inlet of the suction pipe to cut the residual scrap before the residual scrap enters the suction pipe, thereby further preventing the clogged suction pipe.

The effects that may be obtained from the present disclosure are not limited to the above-mentioned effects, and these and other effects will be clearly understood by persons having ordinary skill in the technical field pertaining to the present disclosure from the following description.

### BRIEF DESCRIPTION OF THE DRAWINGS

FIG. 1 is a perspective view of a tab notching apparatus according to a first embodiment of the present disclosure.
FIG. 2 is a perspective view of a suction device and residual scrap according to a first comparative example of the present disclosure.
FIG. 3 is a perspective view of a suction device and residual scrap according to a second comparative example of the present disclosure.
FIG. 4 is a perspective view of a suction device included in the tab notching apparatus shown in FIG. 1.
FIG. 5 is an exploded view of the suction device shown in FIG. 4.
FIG. 6 is a cross-sectional view of a cutting device shown in FIG. 5.
FIG. 7 is a cross-sectional view of a cutting device according to a second embodiment of the present disclosure.
FIG. 8 is a cross-sectional view of a cutting device according to a third embodiment of the present disclosure.
FIG. 9 is a cross-sectional view of a cutting device according to a fourth embodiment of the present disclosure.
FIG. 10 is an exploded view of a cutting device according to a fifth embodiment of the present disclosure.

### DETAILED DESCRIPTION OF THE INVENTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on, may be simply used to distinguish the corresponding element from the corresponding other embodiment, and are not intended to limit the corresponding elements in another aspect 130a-1 (for example, importance or order).

When a certain (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes not only direct connection, coupling, support or contact of the elements but also indirect connection, coupling, support or contact through a third element.

When an element is referred to as being located "on" another element, the element can contact the other element and intervening elements may be present.

Meanwhile, the terms "up-down direction", "lower" and "front-rear direction" as used herein are defined on the basis of the drawings, and the shape and location of each element is not limited by these terms.

Hereinafter, the embodiments according to the present disclosure will be described in detail with reference to the accompanying drawings.

### First embodiment

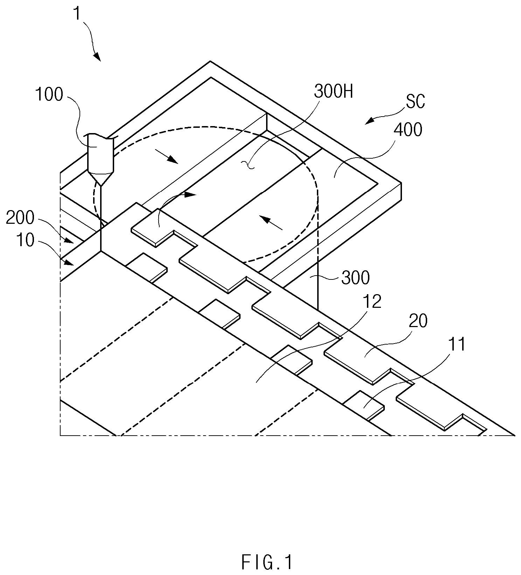

FIG. 1 is a perspective view of a tab notching apparatus 1 according to a first embodiment of the present disclosure.

The tab notching apparatus 1 according to the first embodiment of the present disclosure and a suction device SA included in the tab notching apparatus 1 will be described with reference to FIG. 1.

The tab notching apparatus 1 may be provided to form an electrode tab 11 on an electrode 10.

A secondary battery (not shown) may include a plurality of electrodes 10 and a battery case (not shown) accommodating the electrodes 10 to produce electricity. In this instance, the plurality of electrodes 10 needs to be connected to each other, and an electrical connection between the plurality of electrodes 10 may be formed by connecting the electrode tab 11 included in each of the plurality of electrodes 10 to each other. More specifically, the electrode 10 may include a metal current collector and an active material layer 12 present on the current collector. A part of the current collector that is not coated with the active material layer 12 may become the electrode tab 11 configured to move electricity.

The electrode 10 may include a portion where the active material layer 12 is located and the electrode tab 11 extending from the portion where the active material layer 12 is located. The electrode tab 11 may be smaller in width than the active material layer 12. A sealing portion of the battery case may be located adjacent to the active material layer 12 that is not directly connected to the electrode tab 11, leading to sufficient sealing of the battery case. In other words, the electrode tab 11 may be preferably smaller in width than the active material layer 12 to form a space for sufficient sealing of the battery case in the subsequent process.

The electrode tab 11 may be formed by the tab forming apparatus shown in FIG. 1.

The active material layer 12 extending in the left-right direction on the basis of FIG. 1 may be cut into pieces along the dashed lines in the front-rear direction to form one electrode 10 for each piece. The electrode 10 shown in FIG. 1 is in an uncut state. When the uncut electrode 10 is formed as one electrode 10 at one end of the active material layer 12, the electrode tab 11 positioned at the center of each active material layer 12 may be formed. In other words, on the basis of FIG. 1, a plurality of electrode tabs 11 arranged in the left-right direction at the rear side of the active material layer 12 may be formed. The plurality of electrode tabs 11 may be spaced apart from each other at a regular interval in the left-right direction.

To form the plurality of electrode tabs 11, the tab notching apparatus 1 may include a notching module 100. The notching module 100 may include, for example, a laser device as shown in FIG. 1. The uncut electrode 10 may be placed on a stage 200, and the notching module 100 may emit a laser toward the electrode 10 located on the stage 200 to form the electrode tab 11. In this instance, the notching module 100 may emit the laser toward the stage 200 from the fixed position, and the stage 200 may move to move the electrode 10 so as to form the plurality of electrode tabs 11.

During the formation of the electrode tab 11, residual scrap 20 may be formed. The residual scrap 20 may have a groove corresponding to the electrode tab 11 and extend in a direction. On the basis of FIG. 1, the residual scrap 20 may extend in the left-right direction. In this instance, a part of the residual scrap 20 that forms the groove corresponding to the electrode tab 11 may be omitted, and the residual scrap 20 may be formed by cutting a connection portion between the adjacent electrode tabs 11, and unlike FIG. 1, the total length of the residual scrap 20 may be short and a plurality of residual scraps 20 may be formed. The technical aspect of the present disclosure may be applied to the residual scrap 20 formed as described above, but preferably, like the first embodiment of the present disclosure, the residual scrap 20 may be connected as one and extend in a direction. Here, when only the connection portion between the adjacent electrode tabs 11 is formed into the residual scrap 20, it may represent that the notching module 100 only cuts between the adjacent electrode tabs 11 without cutting the end portion of the electrode tab 11, and accordingly it may fail to form a smooth surface at the end portion of the electrode tab 11. Further, the laser from the notching module 100 may have optimal output for cutting the electrode tab 11, but when the laser moves toward the adjacent electrode tab 11 without forming the end portion of the electrode tab 11, the laser may be emitted directly to the stage 200 during the movement, causing damage to the stage 200. Accordingly, to prevent this problem, the residual scrap 20 formed during the formation of the electrode tab 11 by the notching module 100 may extend in a direction. That is, the notching module 100 may be provided to prevent the residual scrap 20 formed during the formation of the adjacent electrode tab 11 from getting it cut.

When the residual scrap 20 is located on the stage 200, the residual scrap 20 may obstruct the formation of another electrode tab 11, so the tab notching apparatus 1 may include the suction device SA configured to suck up the residual scrap 20. The suction device SA may be disposed at a location of one end of the residual scrap 20, and configured to suck up one end of the residual scrap 20. In this instance, when the stage 200 is moved to the left on the basis of FIG. 1, the electrode 10 may be moved to the left accordingly, and the residual scrap 20 will be continuously fed into the suction device SA, so all the residual scrap 20 may be moved to the suction device SA. Further, the suction device SA may include a suction pipe 300 having a suction hole 300H through which the residual scrap 20 moves. The suction pipe 300 may be configured to guide the movement of the residual scrap 20 to dispose of the residual scrap 20. In this instance, the suction pipe 300 may be located adjacent to the stage 200.

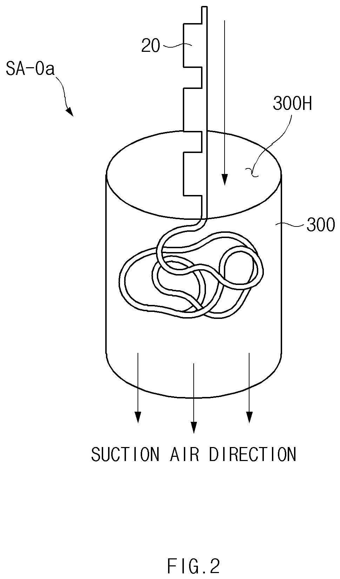

In this instance, as described above, because the residual scrap 20 extends in a direction, the following problem may arise. The problem will be described with reference to FIG. 2.

FIG. 2 is a perspective view of a suction device SA and residual scrap 20 according to a first comparative example of the present disclosure.

The problem of the suction device SA according to the first comparative example of the present disclosure will be described with reference to FIG. 2.

As shown in FIG. 2, the suction device SA according to the first comparative example that is compared with the first embodiment may not have any device mounted on the suction pipe 300. When the residual scrap 20 moves toward the suction hole 300H, it is desirable that the residual scrap 20 moves along the extension direction of the suction hole 300H, but in practice, the residual scrap 20 may get entangled. Accordingly, as shown in FIG. 2, the entangled residual scrap 20 may block the suction hole 300H. When the suction hole 300H is blocked, it is impossible to move the residual scrap 20 through the suction pipe 300 any longer, so an amount of time is spent on removing the clog, resulting in increased secondary battery production time.

To overcome the above-described problem, a second comparative example may be presented below.

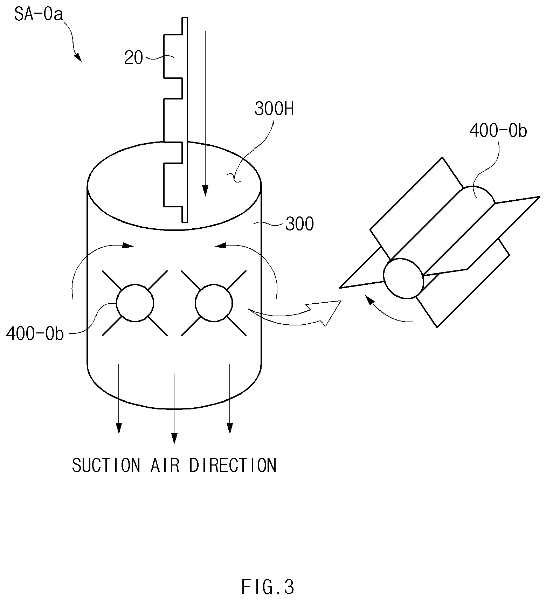

FIG. 3 is a perspective view of a suction device SA and residual scrap 20 according to the second comparative example of the present disclosure.

The suction device SA according to the second comparative example of the present disclosure will be described with reference to FIG. 3.

The suction device SA according to the second comparative example may include a cutting device 400 mounted inside the suction pipe 300. The cutting device 400 according to the second comparative example may cut the residual scrap 20 while rotating. The cutting device 400 may include an axis and a portion that protrudes radially from the axis. As the axis rotates, the protruding portion of the cutting device 400 may rotate, and accordingly, the residual scrap 20 may be cut by pressure. The cutting device 400 may include a pair of cutting devices, and the pair of cutting devices 400 may cut the residual scrap 20 located between them.

The cutting device 400 designed to perform the cutting operation by rotation can directly use the driving force of a motor 430, but this method pulls the residual scrap 20. In other words, on the basis of FIG. 3, the cutting device 400 applies a predetermined pressure downward to the residual scrap 20 while rotating, and thereby the residual scrap 20 may be pulled down. When the residual scrap 20 is pulled down, it may represent that the electrode 10 connected to the residual scrap 20 is pulled down. In particular, the residual scrap 20 separated from the electrode 10 will not affect the electrode 10 when it is pulled down, but when the residual scrap 20 still connected at the end portion to the electrode 10 is pulled down, the electrode 10 may be pulled together, causing misalignment of the electrode 10.

Further, because the cutting device 400 according to the second comparative example is located inside the suction pipe 300, the residual scrap 20 is not cut until it moves up to the cutting device 400. In other words, when the residual scrap 20 clumps together above the cutting device 400 on the basis of FIG. 3, there is no solution to this problem.

To prevent the above-described problem, the suction device SA according to the first embodiment as described below may be provided.

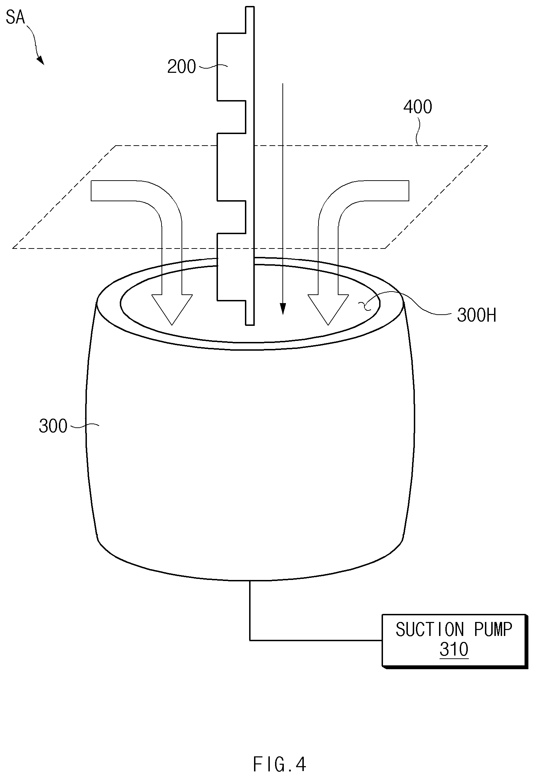

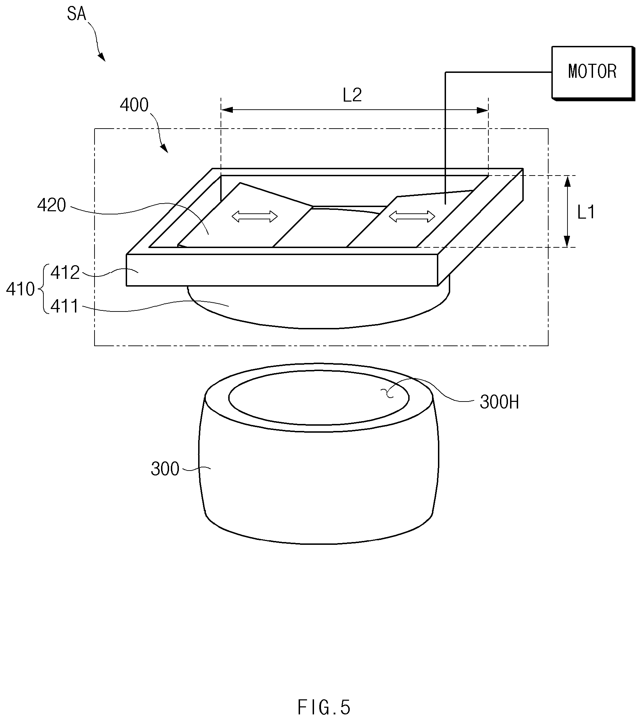

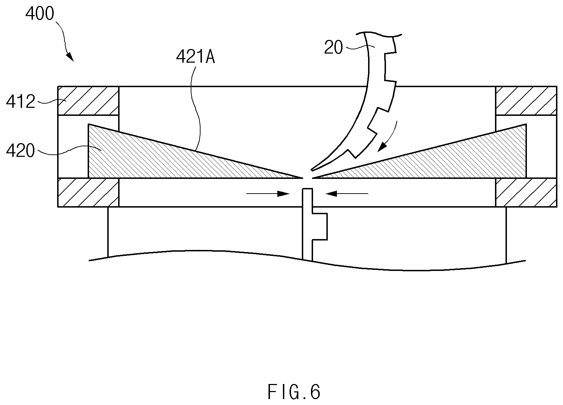

FIG. 4 is a perspective view of the suction device SA included in the tab notching apparatus 1 shown in FIG. 1. FIG. 5 is an exploded view of the suction device SA shown in FIG. 4. FIG. 6 is a cross-sectional view of the cutting device 400 shown in FIG. 5.

The suction device SA according to the first embodiment of the present disclosure will be described with reference to FIGS. 4 to 6. Here, because the suction device SA is the component of the tab notching apparatus 1, it may be interpreted that the following description is applied to the tab notching apparatus 1.

As shown in FIG. 4, the suction device SA may include the suction pipe 300 having the suction hole 300H through which the residual scrap 20 formed by forming the electrode tab 11 moves, and the cutting device 400 configured to cut the residual scrap 20 moving toward the suction hole 300H. In this instance, the cutting device 400 may include a cutter 420 located adjacent to the inlet of the suction pipe 300. Accordingly, it may be possible to reduce the likelihood that the residual scrap 20 clumps together inside the suction pipe 300. More specifically, the cutter 420 may be located outside the inlet of the suction pipe 300. Accordingly, the residual scrap 20 moving into the suction pipe 300 may be fed in a cut state. The cut residual scrap 20 may be less apt to clump together, thereby preventing the suction pipe 300 from being clogged with the residual scrap 20.

Further, the cutter 420 may be located adjacent to the stage 200. Accordingly, the residual scrap 20 separated from the stage 200 may be immediately cut and guided to move to the suction pipe 300.

In this instance, as shown in FIG. 5, the cutting device 400 may include the cutter 420 configured to slidably move. Because the residual scrap 20 is cut by the sliding movement, the residual scrap 20 may be cut without being subjected to a pulling force. Specifically, the sliding movement direction of the cutter 420 may be the left-right direction on the basis of FIG. 5. In other words, the movement direction of the cutter 420 may be a direction perpendicular to the extension direction of the suction pipe 300. The residual scrap 20 will move in the extension direction of the suction pipe 300, and generally, the residual scrap 20 will extend in the movement direction of the residual scrap 20, so the sliding direction may be a direction perpendicular to the extension direction of the residual scrap 20. Accordingly, when the cutter 420 moves in the sliding direction, the residual scrap 20 may be cut in the direction perpendicular to the extension direction of the residual scrap 20, making it easy to cut.

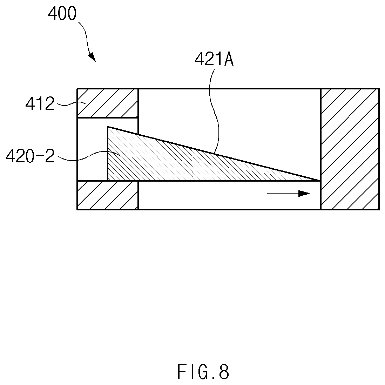

In this instance, as shown in FIG. 6, the cutter 420 may include a pair of cutters with their end portions facing each other. However, the pair of cutters 420 may not necessarily be provided, and its description will be provided in the description of the third embodiment made with reference to FIG. 8.

The pair of cutters 420 may be located at a cutting position at which the end portions contact each other and a faraway position at which they are spaced apart from each other. The cutter 420 may be configured to cut the residual scrap 20 at the cutting position. When the pair of cutters 420 are at the cutting position, the pair of cutters 420 may cut the residual scrap 20 located between them as shown in FIG. 6.

The cutter 420 may have a cutter outer surface 421A that faces away from the suction pipe 300. The cutter outer surface 421A may face upward on the basis of FIG. 6. When the residual scrap 20 moves toward the suction pipe 300, the cutter outer surface 421A may be where the residual scrap 20 first touches. In this instance, the cutter outer surface 421A may slope down as it goes toward the center of the pair of cutters 420 of the suction pipe 300. When the residual scrap 20 does not pass between the pair of cutters 420 from above the cutter outer surface 421A, the residual scrap 20 may be moved between the pair of cutters 420 with the guidance of by the cutter outer surface 421A. Because the movement of the residual scrap 20 between the pair of cutters 420 is needed to cut the residual scrap 20, the guided movement of the residual scrap 20 may make it easy to cut the residual scrap 20. In particular, the cutter outer surface 421A may guide the movement of the residual scrap 20 by moving the residual scrap 20 in the direction of gravity, thereby guiding the movement of the residual scrap 20 with the help of gravity. In other words, the cutter outer surface 421A may be inclined along the extension direction of the suction pipe 300 from the inlet of the suction pipe 300 as it goes toward the end portion. Accordingly, it may be possible to guide the movement of the residual scrap 20 in the extension direction of the suction pipe 300.

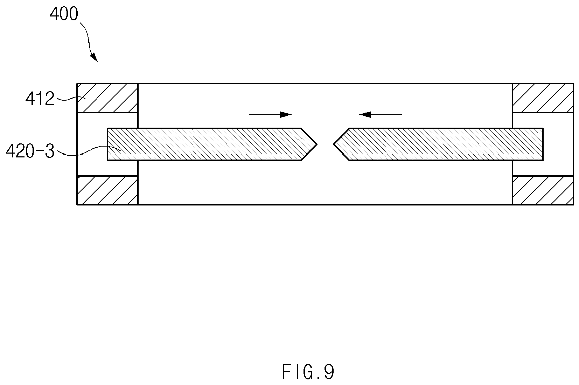

Further, the cutter outer surface 421A of each of the pair of cutters 420 may be inclined along the extension direction of the suction pipe 300 from the inlet of the suction pipe 300 as they get closer to each other. However, when required, the cutter outer surface 421A may be formed on a part of the cutter 420. Its detailed description will be provided in the description of the fourth embodiment made with reference to FIG. 9.

The pair of cutters 420 may have, at the end portions, a portion having a decreasing cross-sectional area as they get closer to each other as shown in FIG. 6. The portion having the decreasing cross-sectional area may be so sharp like a blade that less pressure may be needed to cut the residual scrap 20. For this shape, as mentioned above, the cutter outer surface 421A located on the upper side of the cutter 420 may slope down as it goes toward the center of the suction pipe 300, and the lower surface of the cutter 420 may extend in the left-right direction without slope. However, when required, the cutter 420 may have the cutter outer surface 421A but not a change in cross-sectional area, and in this case, may provide stronger pressure to cut the residual scrap 20.

As shown in FIG. 5, the cutting device 400 may include a cutter housing 410 accommodating the cutter 420.

The cutter housing 410 may include a mount portion 411 configured to be detachably mounted onto the suction pipe 300 and a guide portion 412 configured to guide the movement of the cutter 420.

The mount portion 411 may have a shape that conforms to the shape of the end portion of the suction pipe 300 to hold the end portion of the suction pipe 300. As shown in FIG. 5, the mount portion 411 may be mounted onto the suction pipe 300 by an interference fit. However, when required, the mount portion 411 may be mounted onto the suction pipe 300 by a fastener (not shown). Because the cutter housing 410 may be separated from the suction pipe 300, when changing the specifications of the cutter 420, the cutter housing 410 may be separated from the suction pipe 300 to replace the cutter 420, which makes it easy to replace the cutter 420. This may be understood in comparison with the cutting device 400 of the second comparative example that is difficult to replace because it is located inside the suction pipe 300.

The guide portion 412 may have a guide opening where the cutter 420 is located. The width of the guide opening may correspond to the width of the cutter 420. Accordingly, the guide portion 412 may be located at the edge of the cutter 420, and the movement of the cutter 420 may be guided by the guide portion 412 to ensure consistent sliding.

In this instance, the guide opening may have a larger cross-sectional area than the inlet of the suction pipe 300. Accordingly, even the residual scrap 20 that is originally difficult to move toward the suction pipe 300 may enter the guide opening and move toward the suction pipe 300. Accordingly, it may be possible to prevent the residual scrap 20 from moving out of the suction pipe 300. Further, because the cutter outer surface 421A may guide the residual scrap 20 into the suction pipe 300, the residual scrap 20 entering the guide opening may be moved toward the suction pipe 300.

Further, as shown in FIG. 6, the guide portion 412 may have a hole in the sliding movement direction of the cutter 420. The cutter 420 may be slidably moved through the hole.

Additionally, the cutting device 400 may further include the motor 430 configured to apply a driving force to the cutter 420 to move the cutter 420 and a suction pump 310 configured to form negative pressure in the suction pipe 300.

Hereinafter, other embodiment than the first embodiment will be described. The common description with the first embodiment is omitted, and the other embodiment will be described based on differences. In other words, it is obvious that if any, details not described in the other embodiment may be supplemented through the description of the first embodiment.

### Second embodiment

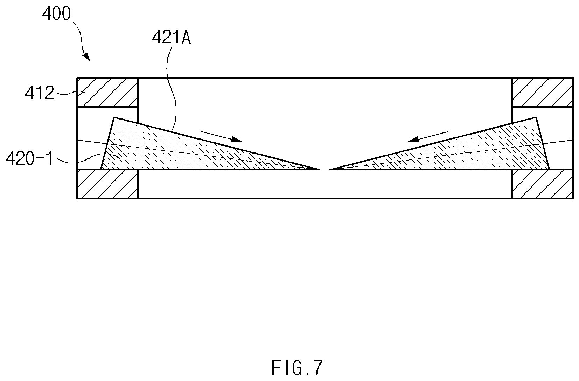

FIG. 7 is a cross-sectional view of the cutting device 400 according to the second embodiment of the present disclosure.

The cutter 420 according to the second embodiment of the present disclosure will be described with reference to FIG. 7.

The second embodiment is different from the first embodiment in that the shape of the cutter 420 is different.

The cutter 420 may be conical in shape as a whole and positioned such that its center line is inclined. That is, the shape of the cutter 420 is not necessarily to the blade shape shown in the first embodiment, and may include any shape with a sharp tip to cut the residual scrap 20.

### Third embodiment

FIG. 8 is a cross-sectional view of the cutting device 400 according to the third embodiment of the present disclosure.

The cutter 420 according to the third embodiment of the present disclosure will be described with reference to FIG. 8.

The third embodiment is different from the first embodiment in that the cutter 420 is a single cutter.

The single cutter 420 may be provided. When the cutter 420 slides and comes into contact with the guide portion 412, the residual scrap 20 located between the cutter 420 and the guide portion 412 may be cut. The third embodiment may avoid inconvenience of having to align the pair of cutters 420 such that the end portions contact each other like the first embodiment.

### Fourth embodiment

FIG. 9 is a cross-sectional view of the cutting device 400 according to the fourth embodiment of the present disclosure.

The cutter 420 according to the fourth embodiment of the present disclosure will be described with reference to FIG. 9.

The fourth embodiment is different from the first embodiment in that the cross-sectional area does not decrease in the extension direction all over the cutter 420.

The cutter 420 may include a first portion having a constant cross-sectional area and a second portion having a decreasing cross-sectional area. The second portion may extend from the first portion. The second portion may form an end portion of the cutter 420.

The guide portion 412 may have a hole that runs around the first portion and guides the movement of the first portion. That is, in the first embodiment, the hole of the guide portion 412 may not contact the cutter 420 when the cutter 420 moves, failing to guide the movement of the cutter 420. In the case of the fourth embodiment, the first portion and the hole of the guide portion 412 may always contact each other during the movement of the cutter 420, and the hole of the guide portion 412 may guide the movement of the cutter 420 throughout the entire area over which the cutter 420 moves.

### Fifth embodiment

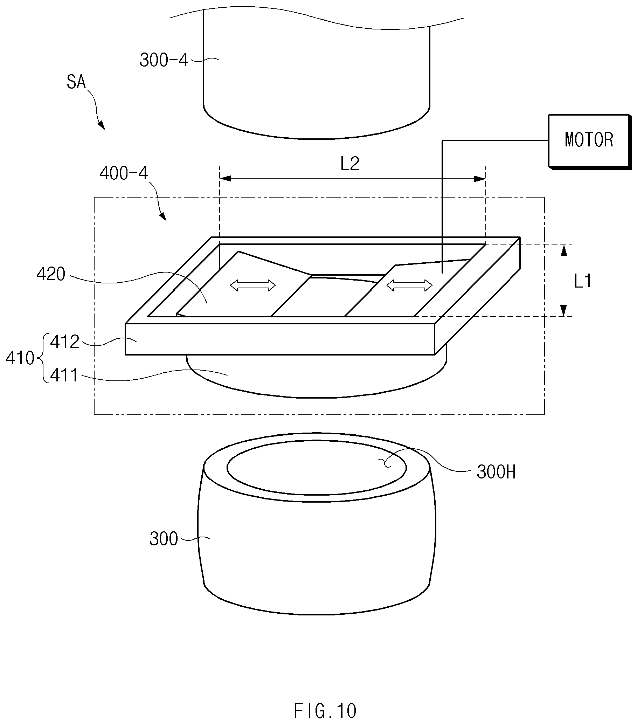

FIG. 10 is an exploded view of the cutting device 400 according to the fifth embodiment of the present disclosure.

The cutting device 400 according to the fifth embodiment of the present disclosure will be described with reference to FIG. 10.

The fifth embodiment is different from the first embodiment in that the cutting device 400 is located in the middle rather than outside the inlet of the suction pipe 300.

In the fifth embodiment, the cutting device 400 is not located outside the inlet of the suction pipe 300, but still, may not pull the residual scrap 20 down. Further, the cutting device 400 may be protected by the suction pipe 300 located above it, thereby preventing damage to the cutter 420.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to certain embodiments and drawings, the present disclosure is not limited thereto, and the present disclosure may be embodied in different forms by persons having ordinary skill in the technical field pertaining to the present disclosure within the technical aspects of the present disclosure and the appended claims and their equivalents.

## Claims

1. A tab notching apparatus comprising:
a suction pipe having a suction hole through which a residual scrap moves, the residual scrap being formed in forming an electrode tab; and
a cutting device configured to cut the residual scrap moving toward the suction hole,
wherein the cutting device includes a cutter configured to slidably move.

2. The tab notching apparatus according to claim 1,
wherein the cutter includes a pair of cutters with end portions facing each other.

3. The tab notching apparatus according to claim 2,
wherein the pair of the cutters are configured to be located at a cutting position at which the end portions contact each other and a faraway position at which the end portions are spaced apart from each other, and
wherein the cutters are configured to cut the residual scrap at the cutting position.

4. The tab notching apparatus according to claim 1,
wherein the cutter has a cutter outer surface facing away from the suction pipe, and
wherein the cutter outer surface is inclined along an extension direction of the suction pipe from an inlet of the suction pipe as it goes toward an end portion.

5. The tab notching apparatus according to claim 2,
wherein each of the pair of cutters has a cutter outer surface facing away from the suction pipe, and
wherein the cutter outer surface of each of the pair of cutters is inclined along an extension direction of the suction pipe from an inlet of the suction pipe as they get closer to each other.

6. The tab notching apparatus according to claim 2,
wherein the pair of cutters have, at the end portions, a portion having a decreasing cross-sectional area as they get closer to each other.

7. The tab notching apparatus according to claim 1,
wherein the cutter is located adjacent to an inlet of the suction pipe.

8. The tab notching apparatus according to claim 1,
wherein the cutter is located outside an inlet of the suction pipe.

9. The tab notching apparatus according to claim 1,
wherein the cutting device further includes a cutter housing accommodating the cutter, and
wherein the cutter housing includes a mount portion configured to be detachably mounted onto the suction pipe.

10. The tab notching apparatus according to claim 9,
wherein the cutter housing includes a guide portion configured to guide the movement of the cutter,
wherein the guide portion has a guide opening where the cutter is located, and
wherein a width of the guide opening corresponds to a width of the cutter.

11. The tab notching apparatus according to claim 10,
wherein the guide opening has a larger cross-sectional area than an inlet of the suction pipe.

12. The tab notching apparatus according to claim 1,
wherein the cutting device further includes a motor configured to apply a driving force to the cutter to move the cutter.

13. The tab notching apparatus according to claim 1, further comprising:
a suction pump configured to form negative pressure in the suction pipe.

14. The tab notching apparatus according to claim 1, further comprising:
a notching module configured to form the electrode tab,
wherein the notching module is provided to prevent the residual scrap formed during the formation of the adjacent electrode tab from getting it cut.

15. The tab notching apparatus according to claim 1, further comprising:
a stage on which the electrode tab is located,
wherein the suction pipe is located adjacent to the stage, and
wherein the cutter is located adjacent to the stage.

16. A tab notching apparatus comprising:
a suction pipe having a suction hole through which a residual scrap moves, the residual scrap being formed in forming an electrode tab; and
a cutting device including a cutter configured to cut the residual scrap moving toward the suction hole,
wherein the cutter is located outside an inlet of the suction pipe.

17. The tab notching apparatus according to claim 16,
wherein the cutter is configured to slidably move.

18. The tab notching apparatus according to claim 16,
wherein the cutter includes a pair of cutters with end portions facing each other.

19. The tab notching apparatus according to claim 18,
wherein the pair of the cutters are configured to be located at a cutting position at which the end portions contact each other and a faraway position at which the end portions are spaced apart from each other, and
wherein the cutters are configured to cut the residual scrap at the cutting position.

20. A suction device comprising:
a suction pipe having a suction hole through which a residual scrap moves; and
a cutting device configured to cut the residual scrap moving toward the suction hole,
wherein the cutting device includes a cutter configured to slidably move.
